(19) Europäisches Patentamt
European Patent Office
Office européen des brevets

(11) EP 3 354 674 A1

(12) # EUROPEAN PATENT APPLICATION

(43) Date of publication:
**01.08.2018 Bulletin 2018/31**

(51) Int Cl.:
***C08G 59/68*** *(2006.01)* ***C08K 5/3415*** *(2006.01)*
***C08L 63/00*** *(2006.01)*

(21) Application number: **17192893.0**

(22) Date of filing: **25.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.10.2016 JP 2016207505**

(71) Applicant: **Shin-Etsu Chemical Co., Ltd.**
**Tokyo 100-0004 (JP)**

(72) Inventors:
- **KUSHIHARA, Naoyuki**
**Gunma, 379-0224 (JP)**
- **SUMITA, Kazuaki**
**Gunma, 379-0224 (JP)**

(74) Representative: **Angerhausen, Christoph**
**Boehmert & Boehmert**
**Anwaltspartnerschaft mbB**
**Pettenkoferstrasse 22**
**80336 München (DE)**

(54) **LIQUID EPOXY RESIN COMPOSITION**

(57) Provided is a liquid epoxy resin composition that is superior in workability and adhesion to a base material, and exhibits an unimpaired resin reliability even under a high-temperature and high-humidity environment. The liquid epoxy resin composition contains (A) an epoxy resin; (B) an imidazole-based curing accelerator; and (C) a maleimide compound. The weight-average molecular weight (Mw) of the maleimide compound (C) is 500 to 2,000, and a maleimide group equivalent per 1 mol of the maleimide compound (C) is 250 to 1,000 g/eq.

EP 3 354 674 A1

## Description

[Technical field]

The present invention relates to a liquid epoxy resin composition containing a maleimide compound.

[Background art]

In recent years, electronic devices such as mobile phones, smartphones, ultrathin liquid crystal or plasma TVs and lightweight laptop computers, have been downsized in an accelerated manner. Electronic parts used in these devices are now integrated in a highly dense manner, and are further packaged in a highly dense manner as well, for example. Further, it has been required that a resin material used in these electronic parts have a low expansion rate in terms of thermal stress at the time of manufacture and use. Furthermore, it has also been required that such resin material have a heat resistance due to the fact that the highly integrated electronic parts tend to generate more heat.

Although epoxy resins widely used in electronic parts have advantages of being highly resistant to heat and highly adhesive to a base material, they have disadvantages of being hard and brittle.

Here, studies have been made on lowering the elastic modulus of a resin so as to lower a stress thereof, by adding to an epoxy resin composition rubber components such as an acrylic rubber, a silicone rubber and/or a butadiene rubber (Patent documents 1 and 2). However, there exists a problem that desired properties cannot be sufficiently achieved as rubber particles clump together as a result of directly adding a powdery rubber component(s) to an epoxy resin. Further, there also occurs a problem that a workability will be impaired as the viscosity of an epoxy resin composition significantly increases as a result of adding a large amount of rubber components to the resin.

Meanwhile, studies have also been made on employing a resin composition obtained by combining an epoxy resin, a cyanate resin as a low-expansion resin, and a bismaleimide resin (Patent document 3). However, a cured product containing a cyanate resin and/or a bismaleimide compound has a high water absorption rate, and is inferior in moisture resistance reliability.

Thus, there has been anticipated an epoxy resin composition capable of exhibiting a lower stress without impairing a high adhesion and a high heat resistance thereof.

[Prior art document]

[Patent document]

[Patent document 1] JP-A-2014-095063
[Patent document 2] JP-A-2014-028932
[Patent document 3] JP-A-2014-122292

[Summary of the invention]

[Problem to be solved by the invention]

It is an object of the present invention to provide a resin composition that has a superior workability and a high adhesion to a base material, and is capable of yielding a cured product having a low elasticity.

[Means to solve the problem]

The inventors of the present invention diligently conducted a series of studies and completed the invention as follows. That is, the inventors found that the following epoxy resin composition was capable of achieving the aforementioned objectives.

Particularly, the invention is to provide the following liquid epoxy resin composition.

[1] A liquid epoxy resin composition comprising:

(A) an epoxy resin;
(B) an imidazole-based curing accelerator; and
(C) a maleimide compound, wherein

a weight-average molecular weight (Mw) of the maleimide compound (C) is 500 to 2,000, and a maleimide group equivalent per 1 mol of the maleimide compound (C) is 250 to 1,000 g/eq.
[2] The liquid epoxy resin composition according to [1], wherein the maleimide compound (C) is liquid at 25°C.
[3] The liquid epoxy resin composition according to [1] or [2], wherein the maleimide compound (C) is contained in an amount of 15 to 90% by mass per a total of the components (A) to (C).
[4] The liquid epoxy resin composition according to any one of [1] to [3], wherein the maleimide compound (C) is a bismaleimide compound represented by the following formula (1)

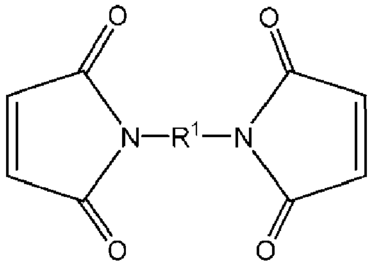

(1)

wherein $R^1$ represents one or more divalent groups selected from: a linear or branched alkylene group having 1 to 40 carbon atoms; a divalent cyclic hydrocarbon group that has 3 to 20 carbon atoms and may have a hetero atom(s); -O-; -NH-; -S-; and $-SO_2-$.

[Effects of the invention]

The liquid epoxy resin composition of the invention is superior in workability and adhesion to a base material, and exhibits an unimpaired resin reliability even under a high-temperature and high-humidity environment.

[Mode for carrying out the invention]

The present invention is described in detail hereunder.

(A) Epoxy resin

Examples of an epoxy resin (A) include a bisphenol A-type epoxy resin, a bisphenol F-type epoxy resin, a bisphenol S-type epoxy resin, a phenol novolac-type epoxy resin, a cresol novolac-type epoxy resin, a bisphenol A novolac-type epoxy resin, a bisphenol F novolac-type epoxy resin, a stilbene-type epoxy resin, a triazine skeleton-containing epoxy resin, a fluorene skeleton-containing epoxy resin, a triphenol alkane-type epoxy resin, a biphenyl-type epoxy resin, a xylylene-type epoxy resin, a biphenyl aralkyl-type epoxy resin, a naphthalene-type epoxy resin, a dicyclopentadiene-type epoxy resin, an alicyclic epoxy resin, an aminophenol-type epoxy resin, a hydrogenated bisphenol-type epoxy resin and an alcohol ether-type epoxy resin. Examples of the epoxy resin (A) may also include diglycidyl ether compounds of polycyclic aromatics such as multifunctional phenols and anthracene. In addition, examples of the epoxy resin (A) may further include phosphorous-containing epoxy resins obtained by introducing phosphorous compounds into the aforementioned epoxy resins and diglycidyl ether compounds. Here, in terms of workability, preferred are a liquid bisphenol A-type epoxy resin, a liquid bisphenol F-type epoxy resin, a liquid naphthalene-type epoxy resin, a liquid aminophenol-type epoxy resin, a liquid hydrogenated bisphenol-type epoxy resin, a liquid alcohol ether-type epoxy resin, a liquid alicyclic epoxy resin and a liquid fluorene-type epoxy resin that are liquid at room temperature. Any one of these epoxy resins may be used alone, or two or more of them may be used in combination.
It is preferred that the epoxy resin(s) (A) be contained in the composition of the invention by an amount of 5 to 95% by mass, more preferably 10 to 90% by mass, and even more preferably 20 to 80% by mass.

(B) Imidazole-based curing accelerator

Examples of an imidazole-based curing accelerator (B) include 2-methylimidazole, 2-ethylimidazole, 4-methylimidazole, 4-ethylimidazole, 2-phenylimidazole, 2-phenyl-4-methylimidazole, 2-phenyl-4-hydroxymethylimidazole, 2-ethyl-4-methylimidazole, 1 -cyanoethyl-2-methylimidazole, 2-phenyl-4-methyl-5-hydroxymethylimidazole, 2-phenyl-4,5-dihydroxymethylimidazole, 2-undecylimidazole, 1-decyl-2-phenylimidazole, 1-cyanomethyl-2-undecylimidazole, 2,4-diamino-6-[2'-methylimidazolyl-(1')]-ethyl-s-triazineisocyanuric acid adduct, 2-methylimidazole isocyanuric acid adduct and 2,3-dihydro-1H-pyrrolo (1,2-a) benzimidazole. Any one of these imidazole-based curing accelerators may be used

alone, or two or more of them may be used in combination.

It is preferred that the imidazole-based curing accelerator(s) (B) be contained in the composition of the invention by an amount of 0.05 to 20% by mass, more preferably 0.1 to 10% by mass, and even more preferably 0.5 to 10% by mass.

(C) Maleimide compound

One example of a maleimide compound (C) is a compound represented by the following general formula (1).

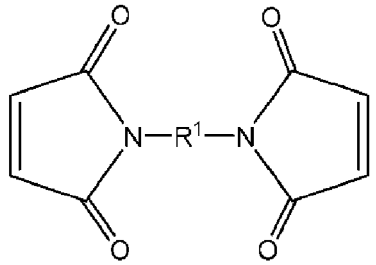

(1)

In the formula (1), $R^1$ represents one or more divalent groups selected from: a linear or branched alkylene group having 1 to 40 carbon atoms; a divalent cyclic hydrocarbon group that has 3 to 20 carbon atoms and may have a hetero atom(s); -O-; -NH-; -S-; and $-SO_2-$.

The number of the carbon atoms of the linear or branched alkylene group may be appropriately selected in view of, for example, heat resistance; and compatibility not only with the components (A) and (B) but also with other components such as a component (D), in some cases. Specific examples of such alkylene group include a methylene group, an ethylene group, a propylene group, a butylene group, a 2,2-dimethylpropylene group, a hexylene group, an octylene group, a decylene group, a dodecylene group, a tetradecylene group, a hexadecylene group and an octadecylene group.

The cyclic hydrocarbon group may be a homocyclic hydrocarbon group or a heterocyclic hydrocarbon group; an aliphatic hydrocarbon group or an aromatic hydrocarbon group. Further, the cyclic hydrocarbon group may be a monocyclic hydrocarbon group having one ring, a polycyclic hydrocarbon group having a plurality of rings, or a fused polycyclic hydrocarbon group having a plurality of rings. In the case of a monocyclic hydrocarbon group, it is preferred that the number of the atoms composing the ring be 3 to 10, more preferably 4 to 8, or even more preferably 5 to 7. In the case of a fused polycyclic hydrocarbon group, it is preferred that the number of the atoms composing the rings be 8 to 20, more preferably 10 to 14, or even more preferably 10 to 12.

Any one of the abovementioned cyclic hydrocarbon groups may be employed as it is; or bonded to a single bond or another group represented by $R^1$. Further, the ring structure of such cyclic hydrocarbon group may also have a substituent group(s) such as an alkyl group having 1 to 20 carbon atoms, a monovalent unsaturated hydrocarbon group having 2 to 20 carbon atoms, a hydroxyl group and a carbonyl group.

Examples of the aromatic hydrocarbon group include those represented by the following formulae (2) and (3).

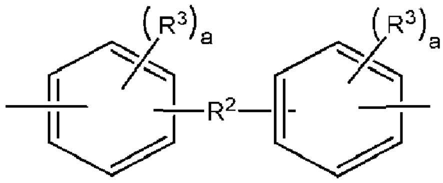

(2)

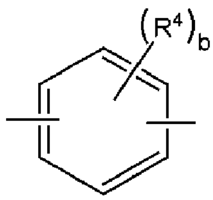

(3)

In the above formula (2), $R^2$ represents a group selected from a single bond, $-CH_2-$, -O-, -S-, $-SO_2-$ and $C(CH_3)_2-$, among which $-CH_2-$ is preferred.

Each $R^3$ independently represents a group selected from a hydroxyl group; and a linear or branched alkyl group having 1 to 6 carbon atoms. Here, a methyl group or an ethyl group is preferred. It is preferred that a represent 0 to 4, more preferably 0, 1 or 2.

In the above formula (3), each $R^4$ independently represents a group selected from a hydroxyl group; and a linear or branched alkyl group having 1 to 6 carbon atoms. Here, a methyl group or an ethyl group is preferred. It is preferred that b be 0 to 4, more preferably 0, 1 or 2.

Examples of the heterocyclic hydrocarbon group include those represented by the following formulae (4) and (5).

-Ring A- (4)

- $R^{10}$- Ring A- $R^{11}$- Ring B- $R^{12}$- (5)

In the above formula (4) or (5), each of $R^{10}$, $R^{11}$ and $R^{12}$ independently represents a group selected from a single bond, an alkylene group having 1 to 40 carbon atoms, -O-, -NH-, -S-, $-SO_2-$ and $-C(CH_3)_2-$.

Each of ring A and ring B independently represents a divalent group comprising a ring(s) selected from furan, pyrrole, imidazole, thiophene, pyrazole, oxazole, isoxazole, thiazole, pyridine, pyrazine, pyrimidine, pyridazine, triazine, benzofuran, isobenzofuran, indole, isoindole, benzothiophene, benzophosphole, benzoimidazole, purine, indazole, benzoxazole, benzisoxazole, benzothiazole, naphthalene, quinoline, isoquinoline, quinoxaline, quinazoline and cinnoline. Each of these rings may also have a substituent group(s).

A weight-average molecular weight of such maleimide compound is 500 to 2,000, preferably 600 to 1,700, in terms of polystyrene. When such weight-average molecular weight is smaller than the aforementioned lower limit value, it may be difficult to achieve a lower elasticity and an effect of improving crack resistance. Meanwhile, when such weight-average molecular weight is greater than 2,000, the maleimide compound may exhibit a significantly impaired compatibility with the epoxy resin(s). Here, the weight-average molecular weight is measured by gel permeation chromatography (GPC) under the following conditions.

GPC measurement condition

Developing solvent: Tetrahydrofuran
Flow rate: 0.6 mL/min
Column: TSK Guardcolumn Super H-L

TSK gel Super H4000 (6.0 mm I.D. ×15 cm×1)
TSK gel Super H3000 (6.0 mm I.D. ×15 cm×1)
TSK gel Super H2000 (6.0 mm I.D. ×15 cm×2) (all made by Tosoh Corporation)

Column temperature: 40°C
Sample injection volume: 20 μL (sample concentration: 0.5% by mass-tetrahydrofuran solution)
Detector: Refractive Index Detector (RI)

It is preferred that the maleimide compound (C) be contained in the composition of the invention by an amount of 15 to 90% by mass, more preferably 20 to 80% by mass, or even more preferably 20 to 60% by mass.

(D) Other additives

The liquid epoxy resin composition of the invention can be obtained by combining given amounts of the components (A), (B) and (C). However, a component (D) as an other additive(s) may also be added if necessary, without impairing the objectives and effects of the present invention. Examples of such additive(s) include a polymerization initiator, an inorganic filler, a mold release agent, a flame retardant, an ion trapping agent, an antioxidant, an adhesion imparting agent, a low stress agent, a coloring agent and a coupling agent.

As the aforementioned polymerization initiator, a thermal radical polymerization initiator is preferred. There are no particular restrictions on such thermal radical polymerization initiator, as long as it can be normally used as a polymerization initiator. As such thermal radical polymerization initiator, preferred are those exhibiting a decomposition starting temperature (i.e. a temperature at which a specimen starts to decompose, provided that the specimen is in an amount of 1 g and placed on a hot plate, and that the temperature rises at a rate of 4°C/min) of 40 to 140°C in a rapid heating test. It is not preferable when the decomposition starting temperature is lower than 40°C, because the liquid epoxy resin

composition will exhibit a worsened storability at room temperature. It is also not preferable when the decomposition starting temperature is greater than 140°C, because a curing time will become extremely long. Specific examples of thermal radical polymerization initiators meeting such requirements, include methylethylketone peroxide, methylcyclohexanone peroxide, methylacetoacetate peroxide, acetylacetone peroxide, 1,1-bis (t-butylperoxy) 3,3,5-trimethylcyclohexane, 1,1-bis (t-hexylperoxy) cyclohexane, 1,1-bis (t-hexylperoxy) 3,3,5-trimethylcyclohexane, 1,1-bis (t-butylperoxy) cyclohexane, 2,2-bis (4,4-di-t-butylperoxycyclohexyl) propane, 1,1-bis (t-butylperoxy) cyclododecane, n-butyl 4,4-bis (t-butylperoxy) valerate, 2,2-bis (t-butylperoxy) butane, 1,1-bis (t-butylperoxy)-2-methylcyclohexane, t-butyl hydroperoxide, P-menthane hydroperoxide, 1,1,3,3-tetramethylbutyl hydroperoxide, t-hexyl hydroperoxide, dicumyl peroxide, 2,5-dimethyl-2,5-bis (t-butylperoxy) hexane, $\alpha,\alpha'$-bis (t-butylperoxy) diisopropylbenzene, t-butylcumyl peroxide, di-t-butyl peroxide, 2,5-dimethyl-2,5-bis (t-butylperoxy) hexyne-3, isobutyryl peroxide, 3,5,5-trimethylhexanoyl peroxide, octanoyl peroxide, lauroyl peroxide, cinnamic acid peroxide, m-toluoyl peroxide, benzoyl peroxide, diisopropyl peroxydicarbonate, bis (4-t-butylcyclohexyl) peroxydicarbonate, di-3-methoxybutyl peroxydicarbonate, di-2-ethylhexyl peroxydicarbonate, di-sec-butyl peroxydicarbonate, di (3-methyl-3-methoxybutyl) peroxydicarbonate, di (4-t-butylcyclohexyl) peroxydicarbonate, $\alpha,\alpha'$-bis (neodecanoyl peroxy) diisopropylbenzene, cumyl peroxyneodecanoate, 1,1,3,3-tetramethylbutyl peroxyneodecanoate, 1-cyclohexyl-1 -methylethyl peroxyneodecanoate, t-hexyl peroxyneodecanoate, t-butyl peroxyneodecanoate, t-hexyl peroxypivalate, t-butyl peroxypivalate, 2,5-dimethyl-2,5-bis (2-ethylhexanoylperoxy) hexane, 1,1,3,3-tetramethylbutylperoxy-2-ethylhexanoate, 1 -cyclohexyl-1 -methylethylperoxy-2-ethylhexanoate, t-hexylperoxy-2-ethylhexanoate, t-butylperoxy-2-ethylhexanoate, t-butyl peroxyisobutylate, t-butyl peroxymaleic acid, t-butyl peroxylaurate, t-butylperoxy-3,5,5-trimethylhexanoate, t-butyl peroxyisopropyl monocarbonate, t-butylperoxy-2-ethylhexyl monocarbonate, 2,5-dimethyl-2,5-bis (benzoylperoxy) hexane, t-butyl peroxyacetate, t-hexyl peroxybenzoate, t-butylperoxy-m-toluoylbenzoate, t-butyl peroxybenzoate, bis (t-butylperoxy) isophthalate, t-butyl peroxyallyl monocarbonate and 3,3',4,4'-tetra (t-butylperoxycarbonyl) benzophenone. Any one of these thermal radical polymerization initiators may be used alone, or two or more of them may be used in combination. Among these thermal radical polymerization initiators, preferred are dicumyl peroxide, t-hexyl hydroperoxide, 2,5-dimethyl-2,5-bis (t-butylperoxy) hexane, $\alpha,\alpha'$-bis (t-butylperoxy) diisopropylbenzene, t-butylcumyl peroxide, di-t-butyl peroxide and the like. If the polymerization initiator is added, it is preferred that it be added in an amount of 0.5 to 10 parts by mass, more preferably 0.5 to 5 parts by mass, per 100 parts by mass of the maleimide compound (C).

However, it is preferred that a photopolymerization initiator be substantively not contained in the composition in view of the fact that the composition is normally used under lightings such as fluorescent lightings, and the viscosity of the composition may thus increase due to a photopolymerization reaction during use. Here, the expression "substantively not contained" refers to a state where a photopolymerization initiator exists in a minute amount such that an increase in viscosity cannot be observed, or a state where a photopolymerization initiator does not exist at all. In the present invention, it is preferred that there be used no photopolymerization initiator at all.

An inorganic filler is added to reduce the thermal expansion rate of the liquid epoxy resin composition, and improve the moisture resistance reliability thereof. Examples of such inorganic filler include silicas (e.g. molten silica, crystalline silica and cristobalite), alumina, silicon nitride, aluminum nitride, boron nitride, titanium oxide, glass fibers and magnesium oxide. The shapes and average particle diameters of these inorganic fillers can be selected according to the intended use. Particularly, preferred are a spherical alumina, a spherical molten silica, glass fibers and the like.

It is preferred that such inorganic filler be added in an amount of 20 to 1,500 parts by mass, more preferably 100 to 1,000 parts by mass, per a total of 100 parts by mass of the components (A), (B) and (C).

A mold release agent is added to improve a mold releasability from a mold. All the known mold release agents may be used, and there are no particular restrictions. Examples of such mold release agents include a carnauba wax, a rice wax, a candelilla wax, polyethylene, oxidized polyethylene, polypropylene, a montan wax (i.e. an ester compound of a montanic acid; and a saturated alcohol, 2-(2-hydroxyethylamino) ethanol, ethylene glycol or glycerin), a stearic acid, a stearic acid ester and a stearic acid amide.

A flame retardant is added to impart a flame retardant property. There are no particular restrictions on such flame retardant, and all the known flame retardants may be used. Examples of such flame retardant include a phosphazene compound, a silicone compound, a zinc molybdate-supported talc, a zinc molybdate-supported zinc oxide, aluminum hydroxide, magnesium hydroxide and molybdenum oxide.

An ion trapping agent is added to trap the ion impurities contained in the liquid resin composition, and avoid thermal degradation and moisture absorption degradation. There are no particular restrictions on such ion trapping agent, and all the known ion trapping agents may be used. Examples of such ion trapping agents include hydrotalcites, a bismuth hydroxide compound and rare-earth oxides.

As for an antioxidant, an adhesion imparting agent, a low stress agent, a coloring agent and a coupling agent, all the known agents may be used, and there are no particular restrictions.

Although the amount of the component (D) added varies depending on the intended use of the liquid epoxy resin composition, it is preferred that a component(s) (D) other than an inorganic filler be in an amount of not greater than 2% by mass with respect to the whole liquid epoxy resin composition.

Method for preparing composition

The liquid epoxy resin composition of the invention can, for example, be prepared by the following method.

A mixture of the components (A), (B) and (C) is obtained by simultaneously or separately mixing, stirring, melting and/or dispersing the epoxy resin (A), the imidazole-based curing accelerator (B) and the maleimide compound (C) while performing a heating treatment if necessary. Further, at least one of the other additives (D) which are an inorganic filler, a mold release agent, a flame retardant and an ion trapping agent may also be added to and mixed with the mixture of the components (A), (B) and (C). Each of the components (A) to (D) may comprise only one kind thereof, or two or more kinds thereof.

There are no particular restrictions on the method for preparing the mixtures, and a device(s) for performing mixing, stirring and dispersion. Specific examples of such device(s) include a kneader equipped with a stirring and heating devices, a twin-roll mill, a triple-roll mill, a ball mill, a planetary mixer and a mass-colloider. These devices may also be appropriately used in combination.

Working example

A planetary mixer was used to mix, at a temperature of 25°C, the following components at the compounding ratios shown in Table 1, followed by using a triple-roll mill to knead and mix the same so as to obtain a liquid epoxy resin composition.

Here, in Table 1, the unit for the amount of each component is "part(s) by mass." And, a molecular weight refers to a weight-average molecular weight (Mw) measured by the aforementioned GPC.

The composition prepared was then evaluated by the following evaluation methods. The results thereof are shown in Table 1.

In working examples 1 to 11; and comparative examples 1 to 7, a liquid epoxy resin composition was prepared by combining the following components at the compounding ratios shown in Table 1. This liquid epoxy resin composition was then molded at 100°C for two hours, and at 150°C for another four hours, thus obtaining a cured product thereof in each example.

(A) Epoxy resin

(1) Epoxy resin (A1): bisphenol A-type epoxy resin (YD-8125 by Tohto Kasei Co., Ltd.)
(2) Epoxy resin (A2): aminophenol-type trifunctional epoxy resin (jER630 by Mitsubishi Chemical Corporation)

(B) Imidazole-based curing accelerator

(1) Imidazole-based curing accelerator (B1): 2-ethyl-4-methylimidazole (by Shikoku Chemicals Corporation)
(2) Imidazole-based curing accelerator (B2): 2-phenyl-4-methylimidazole (by Shikoku Chemicals Corporation)
(3) Imidazole-based curing accelerator (B3): 2,4-diamino-6-[2'-methylimidazolyl-(1')]-ethyl-s-triazineisocyanuric acid adduct (by Shikoku Chemicals Corporation)

(C) Maleimide compound

(1) Liquid bismaleimide compound (C1): (BMI-689 by Designer Molecules Inc.; molecular weight 700, viscosity 1,600 mPa·s, maleimide group equivalent 350 g/eq)

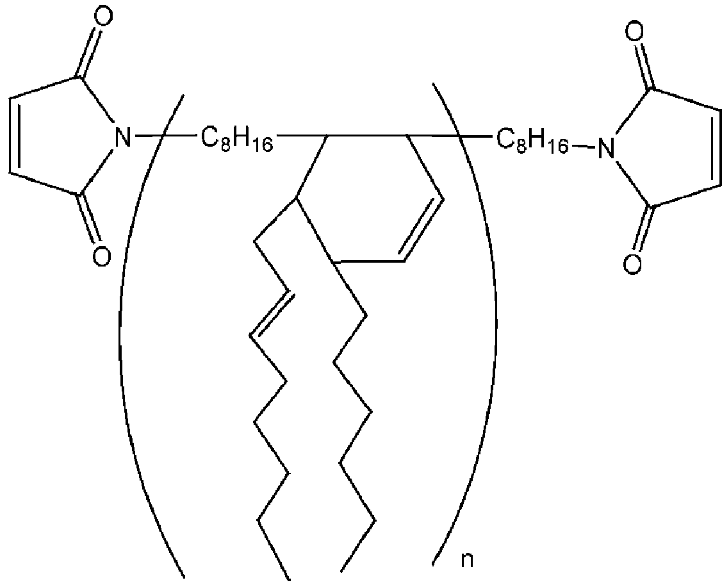

In the above formula, n represents a number of 1 to 10.

(2) Liquid bismaleimide compound (C2): (BMI-1500 by Designer Molecules Inc.; molecular weight 1,500, viscosity 500 Pa·s, maleimide group equivalent 750 g/eq)

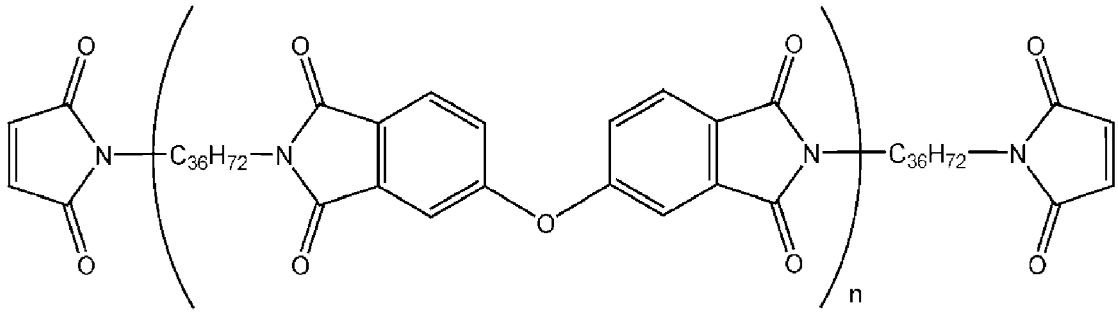

In the above formula, n represents a number of 1 to 10.

(3) Liquid bismaleimide compound (C3): (BMI-1700 by Designer Molecules Inc.; molecular weight 1,700, viscosity 700 Pa.s, maleimide group equivalent 850 g/eq)

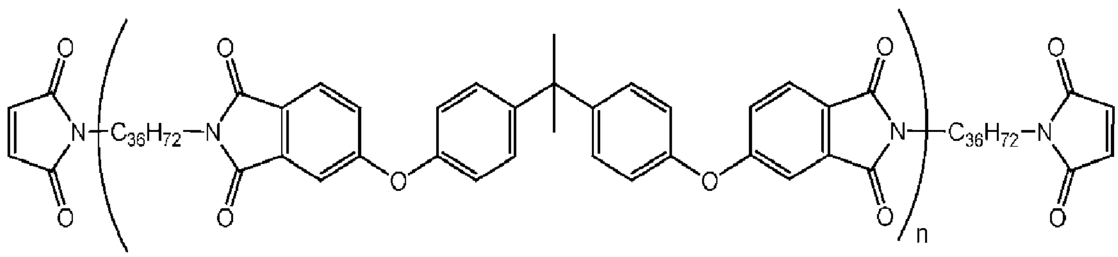

(4) Solid bismaleimide compound (C4): 4,4'-diphenylmethane bismaleimide (BMI-1000 by Daiwa Fine Chemicals Co., Ltd.; molecular weight 351, maleimide group equivalent 175 g/eq)

(5) Solid bismaleimide compound (C5): m-phenylene bismaleimide (BMI-3000 by Daiwa Fine Chemicals Co., Ltd.; molecular weight 268, maleimide group equivalent 134 g/eq)

(D) Other additives

Molten silica: molten spherical silica having an average particle diameter of 14 μm

(by Tatsumori Ltd.)

(1) Viscosity

With regard to working examples 1 to 11; and comparative examples 1 to 7, since the composition before curing was liquid at 25°C, an E-type viscometer was used to measure the viscosity of the composition at 25°C in accordance with a method described in JIS Z8803:2011. Here, the viscosity measured was a viscosity exhibited two minutes after setting the composition in the E-type viscometer; and the viscosities of the compositions obtained in comparative examples 4 and 5 were not measured since they were in the forms of pastes.

(2) Adhesion

A test piece for adhesion test was obtained by applying the liquid epoxy resin composition of the invention to a 10 × 10 mm silicon wafer, mounting a silicon chip thereon, and then curing the same under the above curing condition. A shear adhesion force at room temperature (25°C) was then measured using such test piece and a bond tester DAGE-SERIES-4000 PXY (by Nordson DAGE Corporation). Here, an adhesion area between a frame of the test piece and the resin was 10 $mm^2$.

(3) Water absorption rate

A disk having a diameter of 50 mm and a thickness of 3 mm was produced under the aforementioned curing conditions. An analytical balance (METTLER AT201 by Mettler-Toledo International Inc.) was used to measure the initial weight of the disk produced, followed by placing the disk in a pressure cooker so as to expose the same to a saturated water vapor of $2.03 \times 10^5$ Pa at 121°C for 96 hours. Later, the analytical balance (METTLER AT201 by Mettler-Toledo International Inc.) was again used to weigh the disk that had absorbed moisture. A water absorption rate (%) was calculated using the following formula.

$$\text{Water absorption rate (\%)} = \frac{(\text{Weight after moisture absorption[g]} - \text{Initial weight[g]})}{\text{Initial weight [g]}} \times 100$$

(4) Tensile elastic modulus

A tensile elastic modulus (initial value) of a cured product prepared under the above curing conditions was measured in accordance with JIS K7161:1994.

(5) Tensile elastic modulus-retention rate after stored at high temperature

As is the case with the measurement of the initial value, a cured product was prepared under the above curing conditions, in accordance with JIS K7161:1994. After curing, a specimen obtained was stored in an oven of 180°C for 1,000 hours. The tensile elastic modulus of this specimen was then measured after the specimen had been cooled to the state of room temperature. A tensile elastic modulus-retention rate after stored at high temperature was calculated through (tensile elastic modulus after stored at 180°C for 1,000 hours) / initial value × 100 (%). The tensile elastic modulus-retention rate of each specimen after stored at high temperature is shown in Table 1.

Table 1

| | Working example | | | | | | | | | | | Comparative example | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 1 | 2 | 3 | 4 | 5 | 6 | 7 |
| Epoxy resin (A1) | 75 | 75 | 75 | 45 | 15 | 75 | 75 | | | | | 75 | 95 | | 45 | 45 | | |
| Epoxy resin (A2) | | | | | | | | 75 | 50 | 50 | 50 | | | 95 | | | 95 | 95 |
| Imidazole-based curing accelerator ( B1) | 5 | 5 | 5 | 5 | 5 | | | 5 | 5 | 5 | 5 | | 5 | 5 | 5 | 5 | 5 | 5 |
| Imidazole-based curing accelerator (B2) | | | | | | 5 | | | | | | | | | | | | |
| Imidazole-based curing accelerator B3) | | | | | | | 5 | | | | | | | | | | | |
| Maleimide compound (C1) | 20 | | | 50 | 80 | 20 | 20 | 20 | 45 | 45 | 45 | 20 | | | | | | |
| Maleimide compound (C2) | | 20 | | | | | | | | | | | | | | | | |
| Maleimide compound (C3) | | | 20 | | | | | | | | | | | | | | | |
| Maleimide compound (C4) | | | | | | | | | | | | | | | 50 | | | |
| Maleimide compound (C5) | | | | | | | | | | | | | | | | 50 | | |

(continued)

| | Working example | | | | | | | | | | | Comparative example | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 1 | 2 | 3 | 4 | 5 | 6 | 7 |
| Molten silica | | | | | | | | | | 100 | 400 | | | | | | 100 | 400 |
| Viscosity[Pa·s] | 8 | 65 | 88 | 4 | 2 | 5 | 5 | 6 | 5 | 35 | 160 | 3 | 11 | 9 | Paste | Paste | 55 | 210 |
| Adhesion force to Si [MPa] | 35 | 34 | 33 | 38 | 37 | 35 | 39 | 36 | 36 | 41 | 43 | Uncured | 26 | 28 | 23 | 22 | 31 | 30 |
| Water absorption rate [%] | 0.8 | 0.8 | 0.8 | 0.7 | 0.7 | 0.9 | 0.8 | 1.2 | 1.1 | 0.4 | 0.3 | | 1.4 | 1.6 | 3.7 | 3.3 | 0.5 | 0.4 |
| Tensile elastic modulus [MPa] | 800 | 600 | 500 | 600 | 350 | 800 | 800 | 780 | 600 | 4500 | 13000 | | 1400 | 1600 | 1900 | 1800 | 7000 | 1700 |
| Tensile elastic modulus-retention rate after stored at high temperature [%] | 110 | 105 | 95 | 100 | 110 | 120 | 105 | 105 | 110 | 110 | 110 | | 140 | 130 | 180 | 200 | 150 | 160 |

## Claims

1. A liquid epoxy resin composition comprising:

   (A) an epoxy resin;
   (B) an imidazole-based curing accelerator; and
   (C) a maleimide compound, wherein

   a weight-average molecular weight (Mw) of the maleimide compound (C) is 500 to 2,000, and a maleimide group equivalent per 1 mol of the maleimide compound (C) is 250 to 1,000 g/eq.

2. The liquid epoxy resin composition according to claim 1, wherein the maleimide compound (C) is liquid at 25°C.

3. The liquid epoxy resin composition according to claim 1 or claim 2, wherein the maleimide compound (C) is contained in an amount of 15 to 90% by mass per a total of the components (A) to (C).

4. The liquid epoxy resin composition according to any of claim 1 to claim 3, wherein the maleimide compound (C) is a bismaleimide compound represented by the following formula (1)

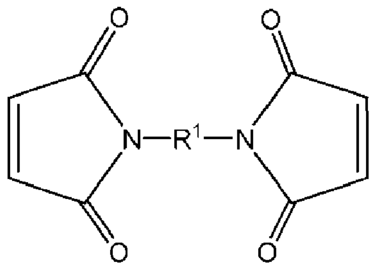

(1)

wherein $R^1$ represents one or more divalent groups selected from: a linear or branched alkylene group having 1 to 40 carbon atoms; a divalent cyclic hydrocarbon group that has 3 to 20 carbon atoms and may have a hetero atom(s); -O-; -NH-; -S-; and $-SO_2-$.

Europäisches Patentamt
European Patent Office
Office européen des brevets

# EUROPEAN SEARCH REPORT

Application Number
EP 17 19 2893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 135 722 A1 (SHIN-ETSU CHEMICAL CO LTD [JP]) 1 March 2017 (2017-03-01) * page 3, paragraph 9 * * page 5, paragraph 21 - page 8, paragraph 38 * * page 8, paragraph 41; examples 1-11,13,15,16 * ----- | 1-4 | INV. C08G59/68 C08K5/3415 C08L63/00 |
| X | US 2013/026660 A1 (CZUBAROW PAWEL [US] ET AL) 31 January 2013 (2013-01-31) * page 1, paragraph 9-11 * * page 3, paragraph 22-23 * * page 5, paragraph 64 - page 6, paragraph 72 * ----- | 1,4 | |
| T | HSIAO SHENG-HUEI; CHANG CHIH-FEN: "Syntheses and thermal properties of ether-containing bismaleimides and their cured resins", JOURNAL OF POLYMER RESEARCH, vol. 3, no. 1, 1 January 1996 (1996-01-01), pages 31-37, XP002778150, * scheme 1; table 1 * ----- | | TECHNICAL FIELDS SEARCHED (IPC) C08G C08K |
| X | WO 2015/123824 A1 (ABLESTIK SHANGHAI LTD [CN]; HENKEL CHINA INVEST CO LTD [CN]) 27 August 2015 (2015-08-27) * pages 16-18; examples 1-3; tables 1,2 * ----- | 1,3,4 | |
| A | DATABASE WPI Week 200213 Thomson Scientific, London, GB; AN 2002-092701 XP002778149, -& JP 2001 261939 A (SUMITOMO BAKELITE CO LTD) 26 September 2001 (2001-09-26) * abstract; examples * ----- | 1-4 | |

The present search report has been drawn up for all claims

2

| Place of search | Date of completion of the search | Examiner |
|---|---|---|
| Munich | 13 February 2018 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 19 2893

This annex lists the patent family members relating to the patent documents cited in the above-mentioned European search report. The members are as contained in the European Patent Office EDP file on
The European Patent Office is in no way liable for these particulars which are merely given for the purpose of information.

13-02-2018

| Patent document cited in search report | | Publication date | Patent family member(s) | | | Publication date |
|---|---|---|---|---|---|---|
| EP 3135722 | A1 | 01-03-2017 | CN | 106479125 | A | 08-03-2017 |
| | | | EP | 3135722 | A1 | 01-03-2017 |
| | | | JP | 2017043767 | A | 02-03-2017 |
| | | | KR | 20170023719 | A | 06-03-2017 |
| | | | TW | 201718691 | A | 01-06-2017 |
| | | | US | 2017058102 | A1 | 02-03-2017 |
| US 2013026660 | A1 | 31-01-2013 | CN | 103717634 | A | 09-04-2014 |
| | | | JP | 6170904 | B2 | 26-07-2017 |
| | | | JP | 2014521754 | A | 28-08-2014 |
| | | | KR | 20140064820 | A | 28-05-2014 |
| | | | TW | 201313823 | A | 01-04-2013 |
| | | | US | 2013026660 | A1 | 31-01-2013 |
| | | | WO | 2013018847 | A1 | 07-02-2013 |
| WO 2015123824 | A1 | 27-08-2015 | CN | 106062075 | A | 26-10-2016 |
| | | | JP | 2017508839 | A | 30-03-2017 |
| | | | KR | 20160122741 | A | 24-10-2016 |
| | | | TW | 201538601 | A | 16-10-2015 |
| | | | US | 2016355734 | A1 | 08-12-2016 |
| | | | WO | 2015123824 | A1 | 27-08-2015 |
| JP 2001261939 | A | 26-09-2001 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014095063 A
- JP 2014028932 A
- JP 2014122292 A